# EUROPEAN PATENT APPLICATION

(11) **EP 1 325 679 A1**
(43) Date of publication of application: **09.07.2003**
(21) Application number: 03075011.1
(22) Date of filing: 03.01.2003
(51) Int. Cl.: A21C 13/00

(54) **Proofer pocket, dough tray and automatic proofer**

(30) Priority: 03.01.2002 NL 1019689
(71) Applicant: Boelen, Lucas, 9581 EX Musselkanaal (NL)
(72) Inventor: Boelen, Lucas, 9581 EX Musselkanaal (NL); Takkenberg-Stabij, Simone Hendrina, 9581 LL Musselkanaal (NL)
(74) Representative: Prins, Adrianus Willem

(57) **Abstract**

A proofer pocket (16) for a proofing apparatus, comprising a cloth of a textile material with a plastic coating, wherein the textile material comprises a loop fabric (160) with an elastic plastic coating (161), and wherein the loop fabric is a toweling-like material or wherein the loop fabric is a terry fabric, and wherein the loop fabric is substantially of cotton and wherein the elastic plastic coating is of polyurethane.

## Description

The invention relates to a proofer pocket according to the preamble of claim 1. The invention further relates to a dough tray and an automatic proofer.

European patent specification 0 022 602 discloses a felt proofer pocket. A disadvantage of this proofer pocket is that it gets filthy fast and so is not hygienic. U.S. Patent 1,382,610 discloses a proofer pocket designed as a thin cloth. A disadvantage of this proofer pocket is that is soon exhibits fungoid growth. Both the felt proofer pocket and the proofer pocket designed as thin cloth have as a disadvantage that they are not suitable to be cleaned at a high temperature because the proofer pocket then shrinks.

Known from practice is a proofer pocket of a flannel material provided with a plastic coating. The proofer pocket is fitted on dough trays in an automatic proofer, with the coated side facing inwards. Hence, dough lying in the dough tray on the proofer pocket rests on the flannel material.

A disadvantage of the proofer pocket known from practice is that it cannot absorb sufficient moisture, particularly so after the proofer pocket has been cleaned a number of times, because this makes the flannel thinner. As a result, dough present on the proofer pocket may begin to adhere to the proofer pocket. Moreover, this proofer pocket known from practice cannot be cleaned properly because at high cleaning temperatures the coating comes off and/or the flannel shrinks.

The object of the invention is to provide a proofer pocket having a greater moisture-absorbing capacity, and generally a better functioning proofer pocket. To achieve the stated object, according to the invention, a proofer pocket as described above is characterized in that the textile material comprises a loop fabric with an elastic plastic coating.

A proofer pocket according to the invention has a greater moisture-absorbing capacity than the known proofer pockets because a loop fabric has a rough surface, so that moisture can easily penetrate into the fabric. Moreover, a loop fabric has a large volume, so that much moisture can be absorbed into the fabric. In addition, a coating adheres better to a loop fabric, so that a proofer pocket according to the invention can be cleaned at higher temperatures than the known proofer pockets. Also, a loop fabric is slightly elastic, so that possible shrinkage can be compensated by stretch in the fabric.

The invention further provides a dough tray according to claim 7 and an automatic proofer according to claim 9.

Specific embodiments of the invention are set forth in the dependent claims.

Further details and aspects of the invention are described hereinafter with reference to the figures represented in the drawing.

Figure 1 schematically shows in cross section a part of an example of an embodiment of a proofer pocket according to the invention.

Figure 2 schematically shows a perspective view of an example of an embodiment of a dough tray according to the invention.

Figure 3 schematically shows a perspective view of a part of an example of an embodiment of a proofing cabinet according to the invention.

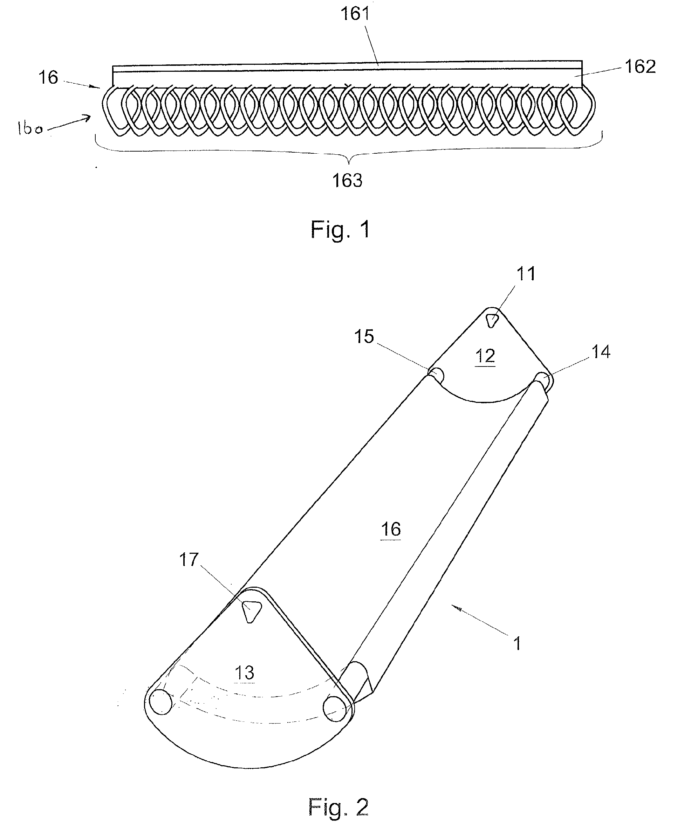

Figure 1 shows in cross section a part of an example of a proofer pocket 16. In the example shown, the proofer pocket comprises a loop fabric 160 provided with a coating 161. The loop fabric comprises a number of loops 163 which are mutually connected by a fabric 162. In use, a lump of dough comes to rest on the uncoated side of the proofer pocket. The loop fabric has a great absorbing capacity, so that moisture from the dough is properly absorbed. As a result, the dough will not adhere, or in any case will adhere to a lesser extent, to the proofer pocket. The coating 161 prevents fungoid growth in the fabric from the coated side.

The loop fabric can have been obtained, for instance, with a known loop or fur stitch known from the knitting art. The loops may also be cut through or cut so that a so-called fur fabric is obtained. The loop fabric can be, for instance, a toweling or terry fabric, so that a great absorbing capacity of the proofer pocket is obtained. The loop fabric can be of cotton, which also enhances the moisture absorption capacity of the fabric.

Another major advantage of a looped structure of the fabric, which occurs especially with relatively soft dough, is that the lumps of dough cannot cling to the proofer pocket through suction. This gives rise to fewer disturbances when inverting the lumps of dough.

The coating 161 can be of elastic plastic, for instance polyurethane (PU) or PU foam. A proofer pocket having a coating of elastic plastic can easily be fitted on a dough tray, because the proofer pocket can be stretched to some extent. In particular when applied in proofing cabinets with a large number of dough trays, it is advantageous to apply such an elastic proofer pocket, because a great saving is thereby obtained on the time it takes to fit the proofer pockets.

When using a polyurethane coating, the loop fabric can be manufactured with advantage from cotton. The proofer pocket can then be made, for instance, from an existing combination material, for instance from the material commercially offered under the trademark name IBENA® having the serial numbers 6045, 6046, 6047 or 6075 for medical applications.

A proofer pocket manufactured from a combination of a cotton loop fabric with a polyurethane coating, and in particular the IBENA® materials referred to, can be cleaned at a high temperature without the coating coming off the fabric. The material can be cleaned, for instance, with a conventional washing machine. The high temperature can be, for instance, at least 60 degrees Centigrade or at least 80 degrees Centigrade. Preferably, the allowable temperature is higher than 90 degrees Centigrade, for instance 95 degrees Centigrade, so that dirt, such as oil or dough residues, is thoroughly removed. Also, such a temperature has a disinfecting effect. Moreover, a combination of a cotton loop fabric with a PU-coating is very durable and it exhibits little or no shrinkage even at high temperatures.

Figure 2 shows an example of a dough tray 1 according to the invention. The tray comprises a frame which, in the example shown, is built up from two spaced apart substantially parallel bars 14, 15, interconnected at the two ends via a connecting element or terminal element 12, 13. The connecting elements extend substantially perpendicularly to the bars 14, 15. In use, the frame is pivotally connected, by way of recesses 11, 17, to the inner work of a proofing cabinet or automatic proofer. Disposed between the bars 14, 15 is a proofer pocket 16 according to the invention. In the example of Fig. 2, the proofer pocket is tubular or sleeve-shaped and designed as an endless band trained around the bars 14, 15. The loop fabric is on the outside and the coating is on the inside. It is also possible to affix the proofer pocket to the frame in a different manner than shown in Fig. 2, for instance with a number of slip knots or a number of press-studs or the like.

In use, in the tray, on the proofer pocket, a unit of dough is placed to allow the dough unit to rise. The tray is suitable for a so-called point system, but also for a bun cabinet system, to enable proving of substantially elongate or spherical dough units for all kinds of large and small loaves of bread which can be mechanically processed in an automatic point or bun proofer.

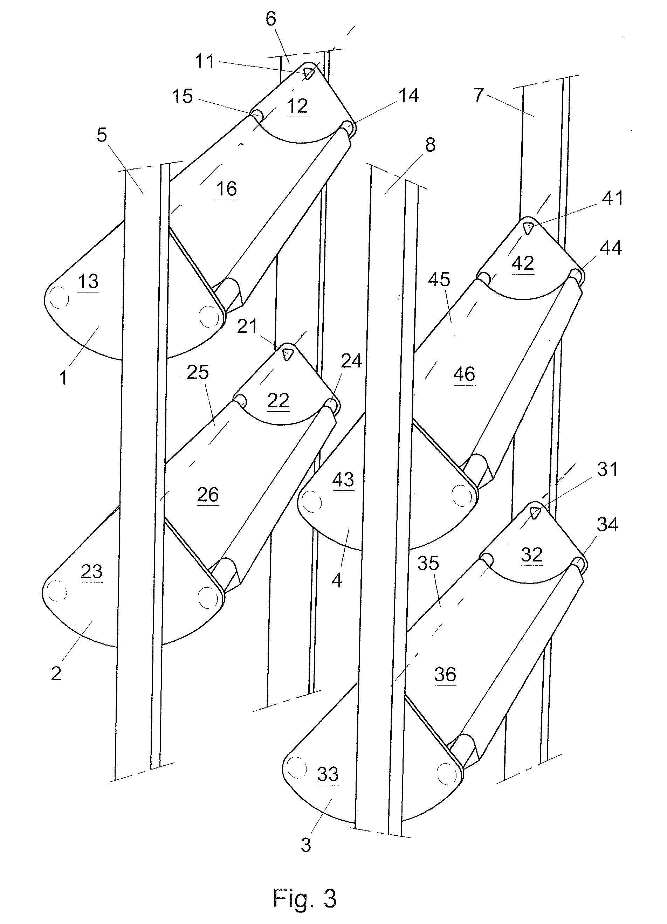

The part of an example of a proofing apparatus or automatic proofer shown in Fig. 3 comprises four dough trays 1-4 which are mounted between beams 5-8 which form a frame. The dough trays 1-4 are adapted to be swung about a shaft 11, 21, 31, 41 and in operation are transported in a known manner along a serpentine path through the proofer. The trays 1-4 comprise a first terminal element 12, 22, 32 and 42, respectively, and a second terminal element 13, 23, 33 and 43, respectively. Disposed between the terminal elements are bars 14-15, 24-25, 34-35 and 44-45, respectively, which constitute a tray frame. Fitted around the tray frame of each tray 1-4 is a proofer pocket 16, 26, 36, 46. The trays 1-4 constitute carriers for lumps of dough and are disposed in a climatic cabinet (proofing cabinet), not shown. In the climatic cabinet, atmospheric conditions such as temperature and air humidity can be controlled, so that dough present on the proofer pockets can rise while traversing the path through the proofing apparatus.

Within the framework of the invention, a combination of features of the examples shown and/or described is possible. Also, it is possible to manufacture the coating from a different plastic material that has suitable properties for a proofing apparatus.

## Claims

1. A proofer pocket for a proofing apparatus, comprising a cloth of a textile material with a plastic coating
**characterized in that**
the textile material comprises a loop fabric with an elastic plastic coating.

2. A proofer pocket according to claim 1, **characterized in that** the loop fabric is a toweling-like material.

3. A proofer pocket according to claim 1, **characterized in that** the loop fabric is a terry fabric.

4. A proofer pocket according to any one of the preceding claims,
**characterized in that** the loop fabric is substantially of cotton.

5. A proofer pocket according to any one of the preceding claims,
**characterized in that** the elastic plastic coating comprises polyurethane.

6. A proofer pocket according to any one of the preceding claims,
**characterized in that** the elastic plastic coating has a foamed structure.

7. A dough tray, comprising
a frame,
a proofer pocket fitted on the frame for supporting dough which is to rise,
**characterized in that**
the proofer pocket is a proofer pocket according to any one of the preceding claims.

8. A dough tray according to claim 7, wherein the proofer pocket is tubular or sleeve-shaped.

9. An automatic proofer for dough, comprising
a climatic cabinet with a number of dough trays,
**characterized in that** at least one dough tray is a dough tray according to claim 7.
